# EUROPEAN PATENT APPLICATION

(11) **EP 4 675 741 A1**
(43) Date of publication of application: **07.01.2026**
(21) Application number: 24763570.9
(22) Date of filing: 08.02.2024
(51) Int. Cl.: H01M 10/058, H01M 10/052, H01M 10/0587, H01M 50/463

(54) **LITHIUM SECONDARY BATTERY**

(30) Priority: 28.02.2023 JP 2023030170
(71) Applicant: Panasonic Intellectual Property Management Co., Ltd., Kadoma-shi, Osaka 571-0057 (JP)
(72) Inventor: URATA, Sho, Osaka 571-0057 (JP)
(74) Representative: Eisenführ Speiser
(86) International application number: PCT/JP2024/004372
(87) International publication number: WO 2024/181086

(57) **Abstract**

Disclosed is a lithium secondary battery including: a positive electrode; a negative electrode; a separator; a spacer; and a nonaqueous electrolyte, wherein the separator is provided between the positive and negative electrodes, the spacer is provided between the separator and at least one of the positive and negative electrodes, in the negative electrode, a lithium metal deposits during charging and the lithium metal dissolves into the nonaqueous electrolyte during discharging, the spacer includes a plurality of first linear portions and a plurality of second linear portions that face each other with the positive electrode or the negative electrode interposed therebetween, and when the plurality of first linear portions and the plurality of second linear portions are viewed in an overlapping manner, each of the plurality of first linear portions crosses at least a portion of the plurality of second linear portions at a plurality of points.

## Description

### [Technical Field]

The present disclosure relates to a lithium secondary battery.

### [Cross Reference To Related Applications]

The present disclosure claims the benefit of priority to Japanese Patent Application No. 2023-030170 filed on February 28, 2023 with the Japanese Patent Office, the entire contents of which are incorporated herein by reference in its entirety.

### [Background Art]

As high capacity nonaqueous electrolyte secondary batteries, lithium ion batteries are known. As nonaqueous electrolyte secondary batteries with a capacity higher than that of lithium ion batteries, lithium secondary batteries (lithium metal secondary batteries) are considered as promising. In a lithium secondary battery, a lithium metal deposits on the negative electrode during charging, and the lithium metal dissolves and is desorbed into the nonaqueous electrolyte as lithium ions during discharging.

In the lithium secondary battery, because the lithium metal deposits on the negative electrode during charging, it is necessary to provide a spacer between the separator and the electrode to ensure a space for lithium to deposit.

Patent Literature 1 proposes "a lithium secondary battery including: a positive electrode including a positive electrode current collector and a positive electrode material mixture layer that contains a positive electrode active material; a negative electrode including a negative electrode current collector that faces the positive electrode; a separator provided between the positive electrode and the negative electrode; and a lithium ion conductive nonaqueous electrolyte, wherein the positive electrode active material contains a composite oxide that contains lithium and a metal M other than lithium, the metal M contains at least a transition metal, a lithium metal deposits on the negative electrode during charging, and the lithium metal dissolves from the negative electrode during discharging, the positive electrode current collector has a first length in a first direction D1 that is shorter than a second length in a second direction D2 that intersects the first direction, a spacer is provided between the positive electrode and the separator so as to form a space for storing the lithium metal between the positive electrode and negative electrode, and a straight line SL that passes through the spacer at three or more points can be drawn along the first direction D1".

### [Citation List]

### [Patent Literature]

[PTL 1] WO 2020/066254

### [Summary of Invention]

### [Technical Problem]

Attempts have been made to, when providing the spacer between the separator and the electrode, securely form a space for lithium to deposit by aligning the positions of spacers that face each other with the electrode interposed therebetween.

The overlapping area between the spacers that face each other with the electrode interposed therebetween increases as the spacer's area increases. Accordingly, the space can be securely formed with ease. On the other hand, the area of the electrode surface covered by the spacers increases as the spacer's area increases. Accordingly, the battery output is likely to deteriorate.

In order to reduce the spacer's area, it is desirable to form the spacer to have a simple linear shape, rather than a geometric pattern. However, it is difficult to align the positions of linear spacers that face each other with the electrode interposed therebetween.

### [Solution to Problem]

One aspect of the present disclosure relates to a lithium secondary battery including: a positive electrode; a negative electrode; a separator; a spacer; and a nonaqueous electrolyte, wherein the separator is provided between the positive electrode and the negative electrode, the spacer is provided between the separator and at least one of the positive electrode and the negative electrode, in the negative electrode, a lithium metal deposits during charging and the lithium metal dissolves into the nonaqueous electrolyte during discharging, the spacer includes a plurality of first linear portions and a plurality of second linear portions, the plurality of first linear portions and the plurality of second linear portions face each other with the positive electrode or the negative electrode interposed therebetween, and when the plurality of first linear portions and the plurality of second linear portions are viewed in an overlapping manner, each of the plurality of first linear portions crosses at least a portion of the plurality of second linear portions at a plurality of points.

### [Advantageous Effects of Invention]

According to the present disclosure, it is possible to securely form the space for lithium to deposit in the lithium secondary battery, and also suppress an increase in the internal resistance.

Novel features of the present invention are set forth in the appended claims. However, the present invention will be well understood from the following detailed description of the present invention with reference to the drawings, in terms of both the configuration and the content together with other objects and features of the present invention.

### [Brief Description of Drawings]

[FIG. 1] FIG. 1 is a vertical cross-sectional view schematically showing one example of a lithium secondary battery according to an embodiment of the present disclosure.
[FIG. 2] FIG. 2 is a cross-sectional view schematically showing a portion of the lithium secondary battery shown in FIG. 1.
[FIG. 3A]FIG. 3A is a plan view of a plurality of first linear portions and a plurality of second linear portions that constitute a spacer included in the lithium secondary battery shown in FIG. 1 as viewed in an overlapping manner (as viewed from a normal direction of a separator).
[FIG. 3B] FIG. 3B is a plan view of a plurality of first linear portions and a plurality of second linear portions that constitute another spacer as viewed in an overlapping manner.
[FIG. 3C] FIG. 3C is a plan view of a plurality of first linear portions and a plurality of second linear portions that constitute a still another spacer as viewed in an overlapping manner.
[FIG. 3D]FIG. 3D is a plan view of a plurality of first linear portions and a plurality of second linear portions that constitute a still another spacer as viewed in an overlapping manner.
[FIG. 3E] FIG. 3E is a plan view of a plurality of first linear portions and a plurality of second linear portions that constitute a still another spacer as viewed in an overlapping manner.

### [Description of Embodiment]

Hereinafter, an embodiment of the present disclosure will be described by way of examples. However, the embodiment of the present disclosure is not limited to the examples described below. In the following description, specific numerical values and materials may be listed as examples. However, other numerical values and materials may also be used as long as the invention according to the present disclosure can be carried out. In the specification of the present application, the expression "a range of a numerical value A to a numerical value B" encompasses the range including the numerical value A and the numerical value B, and can also be interpreted as "a numerical value A or more and a numerical value B or less". In the following description, when lower and upper limits of numerical values of specific physical properties, conditions, and the like are shown as examples, the lower limits and the upper limits can be combined in any way as long as the lower limits are not greater than or equal to the upper limits.

The present disclosure encompasses a combination of features defined in two or more claims arbitrarily selected from a plurality of claims recited in the appended claims of the present application. That is, features defined in two or more claims arbitrarily selected from a plurality of claims recited in the appended claims of the present application can be combined as long as they do not technically contradict to each other.

### (Lithium Secondary Battery)

A lithium secondary battery according to an embodiment of the present disclosure includes a positive electrode, a negative electrode, a separator provided between the positive electrode and the negative electrode, and a nonaqueous electrolyte. In the negative electrode, a lithium metal deposits during charging and the lithium metal dissolves during discharging. Specifically, the negative electrode includes at least a negative electrode current collector, and the lithium metal deposits on the negative electrode current collector. The nonaqueous electrolyte is lithium ion conductive. The lithium secondary battery is also called a lithium metal secondary battery.

In the lithium secondary battery, for example, 70% or more of the rated capacity is exhibited by deposition and dissolution of the lithium metal. Migration of electrons in the negative electrode during charging and during discharging is mainly caused by deposition and dissolution of the lithium metal in the negative electrode. Specifically, 70 to 100% (for example, 80 to 100% or 90 to 100%) of electromigration (electric current from another perspective) in the negative electrode during charging and during discharging is caused by deposition and dissolution of the lithium metal. That is, the negative electrode of the lithium secondary battery is different from a negative electrode in which electromigration in the negative electrode during charging and during discharging is mainly caused by absorption and desorption of lithium ions by a negative electrode active material (graphite or the like).

A collection of the positive electrode, the negative electrode, the separator, and the spacer may also be referred to as an "electrode group". The electrode group may be formed by spirally winding the positive electrode and the negative electrode with the separator and the spacer interposed therebetween. In the case of forming a spirally wound-type electrode group, an elongated positive electrode, an elongated negative electrode, and an elongated separator are used. Alternatively, the positive electrode, the negative electrode, the separator, and the spacer may be stacked. That is, the electrode group may be a spirally wound-type electrode group or a stacked-type electrode group. The following description will be given mainly focusing on an example in which the electrode group is a spirally wound-type electrode group.

### (Spacer)

The spacer is provided between the separator and at least one of the positive electrode and the negative electrode. The spacer includes a plurality of first linear portions and a plurality of second linear portions. The plurality of first linear portions and the plurality of second linear portions face each other with the positive electrode or the negative electrode interposed therebetween.

The spacer may be formed on at least one of a surface of the positive electrode, a surface of the negative electrode, and a surface of the separator. The spacer may be formed on only one side or both sides of the negative electrode, or may be formed on only one side or both sides of the positive electrode.

In particular, from the viewpoint of production process (in particular, the process for producing the spirally wound-type electrode group), the spacer is preferably formed on a surface of the separator. The spacer may be formed on both sides of the separator, but may be formed on only one side (that is, a negative electrode-side surface or a positive electrode-side surface) of the separator.

The separator that constitutes the spirally wound-type electrode group has an elongated shape that has a length D1 that extends along a first direction and a length D2 that extends along a second direction perpendicular to the first direction (D1 < D2).

In the lithium secondary battery, the main function of the spacer is to form a space for the lithium metal to deposit. The expansion of the negative electrode during charging is suppressed by the lithium metal being housed in the space securely formed between the separator and the electrode by the spacer.

However, the spacer covers a portion of the electrode surface, which may cause an increase in the internal resistance of the lithium secondary battery. Accordingly, the smaller the area of the spacer that covers a portion of the electrode surface, the more desirable. On the other hand, as the area of the spacer that covers a portion of the electrode surface becomes smaller, it becomes more difficult to keep a sufficient space between the separator and the electrode.

To address this, according to the present disclosure, a configuration is used in which when the plurality of first linear portions and the plurality of second linear portions are viewed in an overlapping manner, each of the plurality of first linear portions crosses at least a portion of the plurality of second linear portions at a plurality of points. That is, the number of second linear portions that cross one first linear portion is two or more, and may be three or more, or five or more. The number of first linear portions that cross one second linear portion is two or more, and may be three or more, or five or more. As will be described later, even when at least a portion of the plurality of first linear portions are formed intermittently in the first direction, it is sufficient that the number of second linear portions that cross one first linear portion is two or more when viewed by compensating for missing portions. In other words, the missing portions may be ignored when counting the number of second linear portions that cross one first linear portion. Likewise, even when at least a portion of the plurality of second linear portions are formed intermittently in the second direction, it is sufficient that the number of first linear portions that cross one second linear portion is two or more when viewed by compensating for missing portions.

By configuring the plurality of first linear portions and the plurality of second linear portions that face each other with the electrode interposed therebetween to cross each other, a phenomenon of spacers that face each other with the electrode interposed therebetween being caught in the space is remarkably suppressed. Accordingly, a sufficient space is likely to be kept between the separator and the electrode.

According to one embodiment, the plurality of first linear portions may be formed to have a straight linear shape (more specifically, a line segment shape) that extends along a first direction, and the plurality of second linear portions may be formed to have a straight linear shape (more specifically, a line segment shape) that extends along a second direction that is different from the first direction when the plurality of first linear portions and the plurality of second linear portions are viewed in an overlapping manner. The first direction and the second direction may be arbitrarily set.

The plurality of first linear portions are formed to extend along a plurality of independent straight lines (first straight lines) that do not cross each other. Also, the plurality of second linear portions are formed to extend along a plurality of independent straight lines (second straight lines) that do not cross each other. The plurality of independent straight lines that do not cross each other include imaginary line segments that can be drawn on the separator surface or the electrode surface. The imaginary line segments are base lines along which the first and second linear portions are to be formed.

The plurality of straight lines may be stripes that are parallel to each other. Also, the plurality of straight lines may have a periodic pattern. In this case, the plurality of first or second linear portions can be provided uniformly between the separator and the electrode.

According to another embodiment, the plurality of first linear portions may be formed to have a corrugated shape that extends along a first direction, and the plurality of second linear portions may be formed to have a corrugated shape that extends along a second direction that is different from the first direction when the plurality of first linear portions and the plurality of second linear portions are viewed in an overlapping manner. The first direction and the second direction may be arbitrarily set.

The plurality of first linear portions are formed to extend along a plurality of independent corrugated lines that do not cross each other. Also, the plurality of second linear portions may be formed to extend along a plurality of independent corrugated lines that do not cross each other. The plurality of independent corrugated lines that do not cross each other include imaginary corrugated lines that can be drawn on the separator surface or the electrode surface, and are base lines along which the first and second linear portions are to be formed.

The plurality of corrugated lines may be arranged in rows that are parallel to each other. Also, the plurality of corrugated lines may have a periodic pattern. In this case, the plurality of first or second linear portions can be provided uniformly between the separator and the electrode.

According to still another embodiment, either one of the plurality of first linear portions and the plurality of second linear portions may be formed to have a straight linear shape that extends along a first direction as described above, and the other one of the plurality of first linear portions and the plurality of second linear portions may be formed to have a corrugated shape that extends along a second direction that is different from the first direction as described above when the plurality of first linear portions and the plurality of second linear portions are viewed in an overlapping manner.

At least a portion of the plurality of first linear portions may be formed intermittently in the first direction. That is, the first linear portions may be partially missing. In this case, the first linear portions are formed intermittently along straight lines (line segments) or corrugated lines that extend along the first direction, but it can be said that the first linear portions are arranged in stripes or rows when viewed as a whole.

At least a portion of the plurality of second linear portions may be formed intermittently in the second direction. That is, the second linear portions may be partially missing. In this case, the second linear portions are formed intermittently along straight lines (line segments) or corrugated lines that extend along the second direction, but it can be said that the second linear portions are arranged in stripes or rows when viewed as a whole.

In the configuration in which at least a portion of the plurality of first linear portions are formed intermittently in the first direction, the total sum of lengths of the plurality of first linear portions may be 80% or more of the total sum of lengths of a plurality of imaginary line segments (base lines) that can be drawn on the separator surface or the electrode surface. In this case, the space between the separator and the electrode is likely to be securely formed by the plurality of first linear portions.

In the configuration in which at least a portion of the plurality of second linear portions are formed intermittently in the second direction, the total sum of lengths of the plurality of second linear portions may be 80% or more of the total sum of lengths of a plurality of imaginary line segments (base lines) that can be drawn on the separator surface or the electrode surface. In this case, the space between the separator and the electrode is likely to be securely formed by the plurality of second linear portions.

A smaller angle θ1 formed by the first direction and a short-side direction of the separator may be 0° or more and 90° or less. The angle θ1 may be 0° or 90° when the angle θ1 is different from an angle θ2. When the angle θ1 is 0° or more and 45°or less, the electrolyte circulation in the battery is improved, and the rate characteristics tend to be improved. Also, when the angle θ1 is 45° or more and 90° or less, the space for lithium to deposit is likely to be kept in a stable manner. Accordingly, the cycle characteristics tend to be improved.

A smaller angle θ2 formed by the second direction and the short-side direction of the separator may be 0° or more and 90° or less. The angle θ1 and the angle θ2 may be the same angle or different angles. The angle θ2 may be 0° or 90° when the angle θ1 and the angle θ2 are different angles. When the angle θ2 is 0° or more and 45° or less, the electrolyte circulation in the battery is improved, and the rate characteristics tend to be improved. When the angle θ2 is 45° or more and 90° or less, the space for lithium to deposit is likely to be kept in a stable manner. Accordingly, the cycle characteristics tend to be improved.

It is preferable that the first direction and the second direction form an angle equal to the sum (θ1 + θ2) of the angle θ1 and the angle θ2 when the plurality of first linear portions and the plurality of second linear portions are viewed in an overlapping manner. That is, it is preferable that the first direction and the second direction are opposite directions relative to the short-side direction of the separator.

In the configuration in which the first direction and the second direction form the angle (θ1 + θ2), the angle θ1 may be equal to the angle θ2. In this case, the plurality of first linear portions and the plurality of second linear portions can be provided line-symmetric (at least locally) relative to the short-side direction of the separator. In this case, the symmetry of the space formed between the separator and the electrode is improved. Accordingly, the strain on the electrode group during discharging is likely to be dispersed.

A length L of an imaginary line segment (base line) that extends along the first direction or the second direction may satisfy the following expression: L × sinθ ≥ 0.8 × L2, where L2 represents a length of the separator in the short-side direction of the separator. In this case, the first or second linear portions can span the majority of a length from one end to the other end of the separator in the short-side direction of the separator. Accordingly, the space between the separator and the electrode is likely to be securely formed by the plurality of first or second linear portions.

When the plurality of first linear portions and the plurality of second linear portions are viewed in an overlapping manner, a lattice pattern may be formed by the plurality of first linear portions and the plurality of second linear portions. Forming a lattice pattern as described above is beneficial to securely form a sufficient space for lithium to deposit between the separator and the electrode.

An area surrounded by inner frame sides of a unit cell that constitutes the lattice pattern (hereinafter also referred to as "unit cell area (S)") is, for example, 0.2 mm² or more and 200 mm² or less, and may be 2 mm² or more and 130 mm² or less. The unit cell area (S) can be determined based on the following expression: S = d²/sin2θ, where the plurality of first linear portions and the plurality of second linear portions have a straight linear shape and are arranged in stripes that are parallel to each other, θ1 = θ2 = θ is satisfied, and an interval d1 between the first linear portions and an interval d2 between the second linear portions satisfy d1 = d2 = d.

The plurality of first linear portions and the plurality of second linear portions may each have an average thickness of 20 µm or more. The thickness of each linear portion refers to a maximum dimension (maximum thickness) in a direction that is perpendicular to the lengthwise direction of the linear portion and parallel to the thickness direction of the separator. The average thickness of each linear portion can be determined by measuring the maximum thickness of the linear portion at five or more arbitrarily selected points, and then calculating an arithmetic average value of the five or more measured values.

The plurality of first linear portions and the plurality of second linear portions may each have an average width of 50 µm or more and 1000 µm or less. The width of each linear portion refers to a dimension in a direction that is perpendicular to the lengthwise direction of the linear portion and parallel to a main surface of the separator. The average width of each linear portion can be determined by measuring the width of the linear portion at five or more arbitrarily selected points, and then calculating an arithmetic average of the five or more measured values.

The maximum thickness and the width of each linear portion may be measured by capturing an image of a cross section of the linear portion that is parallel to the thickness direction of the separator and an image of an upper surface of the linear portion using a scanning electron microscope (SEM).

The separator includes, on each side, a region A that faces the spacer and a region B that does not face the spacer. On each side, the proportion of the area of the region A relative to the total area of the region A and the region B may be, for example, 20% or less, 10% or less, or 5% or less. In this case, the internal resistance can be controlled to be within a smaller range. The proportion of the area (coverage ratio) of the region A relative to the total area of the region A and the region B on each side may be 2% or more.

A spacer layer may be formed by, for example, applying a dispersion liquid that contains a spacer material onto the separator surface or the electrode surface, and then drying the dispersion liquid. In this case, the first linear portions and the second linear portions included in the spacer can be bonded with a sufficient strength on the separator surface or the electrode surface.

The spacer material-containing dispersion liquid contains, for example, insulating particles, a binder resin, and a thickener. Accordingly, the spacer formed from the dispersion liquid contains the insulating particles, the binder resin, and the thickener. There is no particular limitation on the dispersion medium that can be used in the dispersion liquid. For example, water, an organic solvent, or a mixture of water and an organic solvent can be used. As the organic solvent, for example, N-methyl-2-pyrrolidone (NMP) can be used. In particular, it is desirable to use water because of a small environmental impact.

The insulating particles may have a volume resistivity of, for example 1.0 × 10⁸Ω · cm or more. By the insulating particles having sufficient insulation properties, the lithium metal hardly deposits on the spacer, and thus deposition of the lithium metal in the intended space is facilitated. The volume resistivity of the insulating particles may take a value greater than the above-described value such as, for example, 1.0 × 10¹⁰Ω·cm or more.

The volume resistivity can be measured based on the four-probe method. For example, the volume resistivity may be obtained by pressing the insulating particles at 204 Kgf/cm², and then measuring the volume resistivity using a powder resistivity analyzer (for example, Loresta SP available from Nittoseiko Analytech Co., Ltd.).

As the insulating particles, inorganic particles made of a metal oxide, a metal hydroxide, a metal nitride, a metal carbide, a metal sulfide, or the like can be used. As the metal oxide, aluminum oxide (alumina or boehmite), magnesium oxide, titanium oxide (titania), zirconium oxide, silicon oxide (silica), or the like can be used. As the metal hydroxide, aluminum hydroxide or the like can be used. As the metal nitride, silicon nitride, aluminum nitride, boron nitride, titanium nitride, or the like can be used. As the metal carbide, silicon carbide, boron carbide, or the like can be used. As the metal sulfide, barium sulfate or the like can be used. It is also possible to use a mineral such as an aluminosilicate, a layered silicate, barium titanate, or strontium titanate. In particular, it is preferable to use alumina, silica, titania, or the like.

The content of the insulating particles in the spacer is, for example, less than 80 volume%, and desirably 50 to 70 volume%. The content (volume proportion) of the insulating particles in the spacer may be obtained as volume proportion by observing a cross section of the spacer to capture a TEM image of the cross section of the spacer using a transmission electron microscope (TEM), and then calculating the total area surrounded by the outline of insulating particles in an arbitrarily selected field of view with a size of 10 µm² to obtain the ratio of the calculated total area relative to the area of the field of view. At this time, it is desirable to obtain the volume proportion at three or more fields of view, and calculate an average value of the obtained volume proportions.

Examples of the binder resin include fluorine resin, fluorine rubber, a styrenebutadiene copolymer, a hydride thereof, an acrylonitrile-butadiene copolymer, a hydride thereof, a methacrylic acid ester-acrylic acid ester copolymer, a styrene-acrylic acid ester copolymer, an acrylonitrile-acrylic acid ester copolymer, ethylene propylene rubber, polyphenylene ether, polysulfone, polyethersulfone, polyphenylene sulfide, polyetherimide, polyimide, a polyamide such as a wholly aromatic polyamide (aramid), polyimide, polyamide imide, polyacrylonitrile, polyether, polyolefin, and the like.

The amount of the binder resin may be, for example, 20 to 80 parts by volume, 20 to 70 parts by volume, 20 to 50 parts by volume, or 25 to 40 parts by volume per 100 parts by volume of the insulating particles. When the amount of the binder resin is within this range, the mechanical strength of the spacer can be easily increased, and the bonding strength of the spacer to the separator surface or the electrode surface is likely to be increased.

The thickener may contain, for example, at least one selected from the group consisting of carboxymethyl cellulose and a carboxymethyl cellulose salt (hereinafter, the at least one selected from the group consisting of carboxymethyl cellulose and a carboxymethyl cellulose salt will also be referred to as "CMC"). When a carboxymethyl cellulose salt is used as CMC, a sodium salt, a lithium salt, a potassium salt, an ammonium salt, or the like can be used. In particular, it is desirable that the carboxymethyl cellulose salt contains a sodium salt.

In order to sufficiently exhibit the function of CMC, it is desirable that the dispersion medium used in the dispersion liquid for the spacer material contains water. The amount of water may be 50 mass% or more of the dispersion medium, or may be 70 mass% or more, 80 mass% or more, or 90 mass% or more of the dispersion medium.

The amount of CMC may be, for example, 0.5 to 5 parts by volume, or 1 to 3 parts by volume per 100 parts by volume of the insulating particles. By using CMC in an amount within this range, the thickening effect of CMC can be sufficiently exhibited.

### <Separator>

As the separator, an ion-permeable and insulating porous sheet is used. As the porous sheet, for example, a microporous thin film, a microporous woven fabric, a microporous non-woven fabric, or the like may be used. There is no particular limitation on the material for forming the porous sheet, but a polymer material may be used. As the polymer material, an olefin resin, a polyamide resin, a cellulose, or the like may be used. Examples of the olefin resin include polyethylene, polypropylene, a copolymer of ethylene and propylene, and the like. The porous sheet may contain an additive, where appropriate. As the additive, an inorganic filler or the like may be used.

There is no particular limitation on the thickness of the separator, and the thickness of the separator is, for example, preferably 5 µm or more and 20 µm or less, and more preferably 10 µm or more and 20 µm or less.

The separator may include a porous sheet and a composite material layer. The composite material layer may be formed on one or both main surfaces of the porous sheet. The composite material layer is a layer that allows lithium ions to pass therethrough. The thickness of the composite material layer may be 5% to 50% of the total thickness of the separator.

The composite material layer contains a resin material and inorganic particles. The inorganic particles may include first particles and/or second particles. The first particles are lithium-containing phosphate particles. The first particles have the effect of suppressing heat generation in the battery in the event of an abnormality occurring in the battery. The second particles are particles other than the first particles.

When the composite material layer is formed only on one main surface of the porous sheet, the composite material layer may be provided on the main surface of the porous sheet that faces the positive electrode. By providing the composite material layer on the positive electrode side, it is possible to suppress degradation of the porous sheet caused by an oxidation reaction. On the other hand, when the composite material layer is provided on the negative electrode side, it is possible to suppress degradation of the porous sheet caused by a reduction reaction.

The phosphate contained in the first particles may be at least one selected from the group consisting of lithium phosphate (Li₃PO₄), dilithium hydrogen phosphate (Li₂HPO₄), and lithium dihydrogen phosphate (LiH₂PO₄). In particular, it is preferable to use lithium phosphate because the effect of suppressing heat generation in the battery in the event of an abnormality occurring in the battery is high. The first particles may have a median size in a volume-based particle size distribution of 0.1 µm to 1.0 µm.

One preferred example of the second particles is particles made of an insulating inorganic compound that does not melt or decompose in the event of overheating of the battery. Examples of the material for forming the second particles include an oxide, a hydroxide, a nitride, a carbide, sulfide, and the like. Examples of the oxide include aluminum oxide, boehmite, magnesium oxide, titanium oxide, zirconium oxide, silicon oxide, yttrium oxide, zinc oxide, and the like. Examples of the nitride include silicon nitride, aluminum nitride, boron nitride, titanium nitride, and the like. Examples of the carbide include silicon carbide, boron carbide, and the like. Examples of the sulfide include barium sulfate, and the like. Examples of the hydroxide include aluminum hydroxide, and the like. The second particles may have a median size in a volume-based particle size distribution of 0.2 to 2.0 µm.

The median size in a volume-based particle size distribution of the particles can be measured using, for example, a laser diffraction-scattering particle size distribution analyzer (for example, Microtrac available from Nikkiso Co., Ltd.). Alternatively, the median size may be obtained by observing a cross section of the separator to capture a TEM image of the cross section of the separator using a transmission electron microscope (TEM), calculating the area surrounded by the outline of arbitrarily selected 100 first particles or second particles, determining the diameter of an equivalent circle (perfect circle) that has the same area as the calculated area, and obtaining the median size as an average value of the diameter of the equivalent circle of the 100 particles.

As the resin material, it is desirable to use a polymer material that has a higher level of heat resistance than the porous sheet. The polymer material preferably contains at least one selected from the group consisting of an aromatic polyamide, an aromatic polyimide, and an aromatic polyamide imide. They are known as high heat resistant polymer materials. From the viewpoint of heat resistance, it is preferable to use an aramid, specifically, a meta-aramid (a meta-wholly aromatic polyamide) or a para-aramid (a para-wholly aromatic polyamide).

The content of the inorganic particles in the composite material layer may be in a range of 50 mass% to 99 mass% (for example, in a range of 85 mass% to 99 mass%).

### (Negative Electrode)

The negative electrode includes a negative electrode current collector. In the lithium secondary battery, a lithium metal deposits on the negative electrode surface due to charging. More specifically, lithium ions contained in the nonaqueous electrolyte receive electrons on the negative electrode due to charging and turn into a lithium metal, and the lithium metal deposits on the negative electrode surface. The lithium metal deposited on the negative electrode surface dissolves into the nonaqueous electrolyte as lithium ions due to discharging.

The negative electrode may include a lithium ion absorption layer (a layer that exhibits capacity by absorption and desorption of lithium ions by the negative electrode active material (graphite or the like)) supported on the negative electrode current collector. In this case, the negative electrode in a fully charged state may have an open circuit potential of 70 mV or less relative to the lithium metal (the dissolution/deposition potential of lithium). When the negative electrode in a fully charged state has an open circuit potential of 70 mV or less relative to the lithium metal, the lithium metal is present on a surface of the lithium ion absorbing layer in the fully charged state. That is, the negative electrode exhibits the capacity due to deposition and dissolution of the lithium metal.

As used herein, the term "fully charged state" refers to a state in which a battery is charged to a state of charge of, for example, 0.98 × C or more, where the rated capacity of the battery is represented by C. The open circuit potential of the negative electrode in a fully charged state can be measured by disassembling the battery in a fully charged state under an argon atmosphere to take out the negative electrode from the battery, and assembling a cell using a lithium metal as a counter electrode. The nonaqueous electrolyte used in the cell may have the same composition as the nonaqueous electrolyte of the disassembled battery.

The lithium ion absorbing layer can be obtained by forming a negative electrode material mixture that contains the negative electrode active material into a layer. The negative electrode material mixture may contain, in addition to the negative electrode active material, a binder, a thickener, a conductive material, and the like.

Examples of the negative electrode active material include a carbonaceous material, a Si-containing material, a Sn-containing material, and the like. The negative electrode may contain one negative electrode active material, or may contain a combination of two or more negative electrode active materials. Examples of the carbonaceous material include graphite, graphitizable carbon (soft carbon), and non-graphitizable carbon (hard carbon).

The conductive material is, for example, a carbon material. Examples of the carbon material include carbon black, acetylene black, ketjen black, carbon nanotubes, graphite, and the like.

As the binder, for example, a fluorine resin, polyacrylonitrile, a polyimide resin, an acrylic resin, a polyolefin resin, a rubbery polymer, or the like is used. As the fluorine resin, polytetrafluoroethylene, polyvinylidene fluoride, or the like is used.

The negative electrode current collector may be a conductive sheet. As the conductive sheet, a foil, a film, or the like is used.

As the material for forming the negative electrode current collector (conductive sheet), a conductive material other than a lithium metal and a lithium alloy may be used. As the conductive material, a metal material such as a metal or an alloy may also be used. The conductive material is preferably a material that is unreactive with lithium. More specifically, it is preferable to use a material that does not form an alloy or intermetallic compound with lithium. Examples of the conductive material include copper (Cu), nickel (Ni), iron (Fe), an alloy that contains any of these metal elements, or graphite whose basal planes are preferentially exposed. Examples of the alloy include a copper alloy, stainless steel (SUS), and the like. In particular, it is preferable to use copper and/or a copper alloy because they have a high level of conductivity.

There is no particular limitation on the thickness of the negative electrode current collector. The thickness of the negative electrode current collector is, for example, 5 µm or more and 300 µm or less.

### (Positive Electrode)

The positive electrode includes, for example, a positive electrode current collector, and a positive electrode material mixture layer supported on the positive electrode current collector. The positive electrode material mixture layer contains, for example, a positive electrode active material, a conductive material, and a binder. The positive electrode material mixture layer may be formed on only one or both sides of the positive electrode current collector. The positive electrode can be obtained by, for example, applying a positive electrode material mixture slurry that contains a positive electrode active material, a conductive material, and a binder onto both sides of the positive electrode current collector, and drying the coating films, and then rolling the coating films.

The positive electrode active material is a material that absorbs and desorbs lithium ions. Examples of the positive electrode active material include a lithium-containing transition metal oxide, a transition metal fluoride, a polyanion, a fluorinated polyanion, a transition metal sulfide, and the like. In particular, it is preferable to use a lithium-containing transition metal oxide because the production cost is low and the average discharge voltage is high.

The lithium contained in the lithium-containing transition metal oxide is desorbed from the position electrode as lithium ions during charging, and deposits on the negative electrode or the negative electrode current collector as a lithium metal. During discharging, the lithium metal dissolves from the negative electrode, and lithium ions are desorbed and then absorbed by the composite oxide contained in the positive electrode. That is, the lithium ions involved in charging and discharging are generally derived from the solute contained in the nonaqueous electrolyte and the positive electrode active material.

Examples of the transition metal element contained in the lithium-containing transition metal oxide include Sc, Ti, V, Cr, Mn, Fe, Co, Ni, Cu, Y, Zr, W, and the like. The lithium-containing transition metal oxide may contain one or two or more transition metal elements. The transition metal element may be Co, Ni, and/or Mn. The lithium-containing transition metal oxide may contain one or more representative elements where necessary. Examples of the representative element include Mg, Al, Ca, Zn, Ga, Ge, Sn, Sb, Pb, Bi, and the like. The representative element may be Al or the like.

Out of lithium-containing transition metal oxides, from the viewpoint of obtaining a high capacity, it is preferable to use a composite oxide that contains Ni, Co, and/or Mn as transition metal elements and Al as an optional component, and has a layered rock salt crystal structure. In this case, in the lithium secondary battery, a molar ratio (mLi/mM) of a total amount (mLi) of lithium contained in the positive electrode and the negative electrode to an amount (mM) of a metal M contained in the positive electrode other than lithium is set to, for example, 1.1 or less.

As the binder, the conductive material, and the like, for example, those listed as examples of the binder, the conductive material, and the like used in the negative electrode can be used. The shape and the thickness of the positive electrode current collector can be selected from those listed as examples of the shape and the thickness range of the positive electrode current collector.

As the material for forming the positive electrode current collector (conductive sheet), for example, a metal material that contains Al, Ti, Fe, or the like may be used. As the metal material, Al, an Al alloy, Ti, a Ti alloy, an Fe alloy, or the like may be used. The Fe alloy may be stainless steel (SUS).

There is no particular limitation on the thickness of the positive electrode current collector, and the thickness of the positive electrode current collector may be, for example, 5 µm or more and 300 µm or less.

### (Nonaqueous Electrolyte)

The lithium ion-conductive nonaqueous electrolyte may be a liquid electrolyte (electrolyte solution) or a gel electrolyte. The liquid electrolyte is, for example, an electrolyte solution that contains a nonaqueous solvent and a lithium salt dissolved in the nonaqueous solvent. The concentration of the lithium salt in the electrolyte solution is, for example, 0.5 mol/L or more and 2 mol/L or less. The electrolyte solution may contain a known additive.

The gel electrolyte contains a lithium salt and a matrix polymer, or contains a lithium salt, a nonaqueous solvent, and a matrix polymer. As the matrix polymer, for example, a polymer material that absorbs the nonaqueous solvent and turns into a gel is used. As the polymer material, a fluorine resin, an acrylic resin, a polyether resin, polyethylene oxide, or the like may be used.

The liquid nonaqueous electrolyte is prepared by dissolving a lithium salt in the nonaqueous solvent. By the lithium salt dissolving into the nonaqueous solvent, a lithium ion and an anion are generated.

Examples of the anion include anions such as BF₄⁻, ClO₄⁻, PF₆⁻, CF₃SO₃⁻, CF₃CO₂⁻, an imide anion, and an oxalate complex anion, and the like. Examples of the imide anion include N(SO₂CF₃)₂⁻, N(CₘF2ₘ₊₁SO₂)ₓ(CₙF₂ₙ₊₁SO₂)y⁻ (where m and n each independently represent an integer of 0, 1, or more, x and y each independently represent 0, 1, or 2, and x and y satisfy x + y = 2), and the like. The oxalate complex anion may contain boron and/or phosphorus. Examples of the oxalate complex anion include a bis(oxalate)borate anion, a difluoro(oxalate)borate anion (BF₂(C₂O₄)⁻), PF₄(C₂O₄)⁻, PF₂(C₂O₄)₂⁻, and the like. The nonaqueous electrolyte may contain one or two or more types of these anions.

From the viewpoint of suppressing the deposition of the lithium metal to form dendrites, the nonaqueous electrolyte preferably contains at least an oxalate complex anion. In particular, it is desirable that the nonaqueous electrolyte contains a fluorine-containing oxalate complex anion. Due to interaction of the fluorine-containing oxalate complex anion with lithium, a lithium metal is likely to deposit uniformly in the form of fine particles. For this reason, local deposition of lithium metal can be easily suppressed. The fluorine-containing oxalate complex anion may be combined with a different type of anion. The different type of anion may be PF₆⁻and/or an imide anion.

As the nonaqueous solvent, for example, an ester, an ether, a nitril, an amide, or a halogenated form thereof may be used. The nonaqueous electrolyte may contain one or two or more of these nonaqueous solvents. The halogenated form may be a fluoride or the like.

Examples of the ester include a carbonic ester, a carboxylic ester, and the like. Examples of a cyclic carbonic ester include ethylene carbonate, propylene carbonate, fluoroethylene carbonate (FEC), and the like. Examples of a linear carbonic ester include dimethyl carbonate (DMC), ethyl methyl carbonate (EMC), diethyl carbonate, and the like. Examples of a cyclic carboxylic ester include γ-butyrolactone, γ-valerolactone, and the like. Examples of a linear carboxylic ester include ethyl acetate, methyl propionate, methyl fluoropropionate, and the like.

Examples of the ether include a cyclic ether and a linear ether. Examples of the cyclic ether include 1,3-dioxolane, 4-methyl-1,3-dioxolane, tetrahydrofuran, 2-methyl tetrahydrofuran, and the like. Examples of the linear ether include 1,2-dimethoxy ethane, diethyl ether, ethyl vinyl ether, methyl phenyl ether, benzyl ethyl ether, diphenyl ether, dibenzyl ether, 1,2-diethoxy ethane, diethylene glycol dimethyl ether, and the like.

The concentration of the lithium salt in the nonaqueous electrolyte is, for example, 0.5 mol/L or more and 3.5 mol/L or less. The concentration of the anion in the nonaqueous electrolyte may be 0.5 mol/L or more and 3.5 mol/L or less. Also, the concentration of the oxalate complex anion in the nonaqueous electrolyte may be 0.05 mol/L or more and 1 mol/L or less.

The nonaqueous electrolyte may contain an additive. As the additive, an additive that forms a coating film on the negative electrode may be used. By a coating film derived from the additive being formed on the negative electrode, the formation of dendrites is likely to be suppressed. Examples of the additive include vinylene carbonate, FEC, vinyl ethyl carbonate (VEC), and the like.

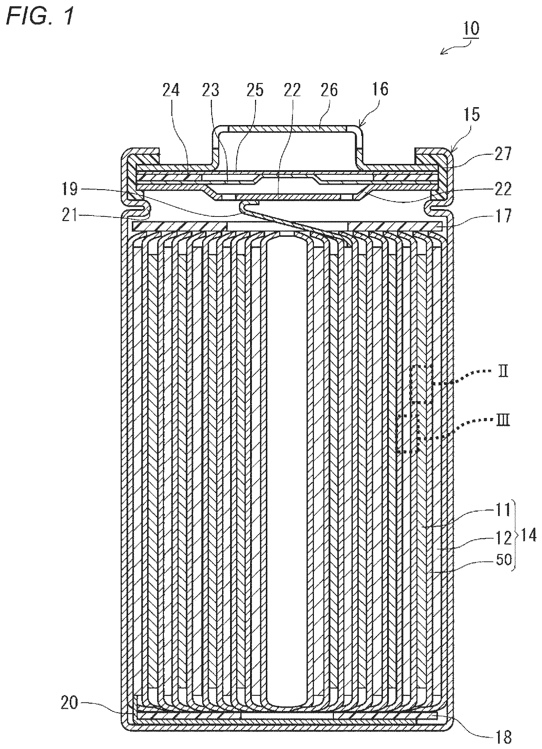

Hereinafter, the lithium secondary battery will be described with reference to the drawings. FIG. 1 is a vertical cross-sectional view schematically showing one example of the lithium secondary battery. As the constituent elements of the lithium secondary battery described below, the constituent elements described above can be used. The constituent elements described below can be changed based on the foregoing description. In the lithium secondary battery described below, the constituent elements that are not essential to the lithium secondary battery of the present disclosure may be omitted. In the diagrams which will be referred to in the following description, for the sake of facilitating the understanding, the scale of the constituent elements is changed.

FIG. 1 is a vertical cross-sectional view schematically showing one example of a lithium secondary battery according to one embodiment. In FIG. 1, an illustration of the spacer and the space formed by the spacer is omitted. A cylindrical lithium secondary battery 10 shown in FIG. 1 includes a cylindrical battery case, and a spirally-wound type electrode group 14 and a nonaqueous electrolyte (not shown) that are housed in the battery case. FIG. 1 is a vertical cross section of the battery including a winding axis of the electrode group 14. The battery case includes a case main body 15 that is a bottomed cylindrical metal container and a sealing member 16 that seals an opening of the case main body 15. A gasket 27 is provided between the case main body 15 and the sealing member 16. Due to the gasket 27, the air-tightness of the battery case is ensured. In the case main body 15, insulating plates 17 and 18 are respectively provided opposite ends of the electrode group 14 in a direction (first direction) of the winding axis of the electrode group 14.

The case main body 15 includes, for example, a narrow portion 21 formed by partially pressing a side wall of the case main body 15 from the outside. The narrow portion 21 may be formed in an annular shape that extends along a circumferential direction of the case main body 15 in the side wall of the case main body 15. The sealing member 16 is supported on an opening-side surface of the narrow portion 21.

The sealing member 16 includes a filter 22, a lower valve 23, an insulating member 24, an upper valve 25, and a cap 26. In the sealing member 16, these members are stacked in this order. The sealing member 16 is attached to the opening of the case main body 15 such that the cap 26 is located outside the case main body 15 and the filter 22 is located inside the case main body 15. The above-described members that constitute the sealing member 16 have, for example, a disc or ring shape. The lower valve 23 and the upper valve 25 are connected to each other at their center portions, with the insulating member 24 being interposed between their peripheral edges. The filter 22 and the lower valve 23 are connected to each other at their peripheral edges. The upper valve 25 and the cap 26 are connected to each other at their peripheral edges. That is, the members excluding the insulating member 24 are electrically connected to each other.

Although not shown, the lower valve 23 includes a ventilation hole. Accordingly, if the internal pressure of the battery case increases due to overheating or the like, the upper valve 25 bulges toward the cap 26 and moves apart from the lower valve 23. The electric connection between the lower valve 23 and the upper valve 25 is thereby interrupted. If the internal pressure further increases, the upper valve 25 ruptures, and a gas is released from an opening hole formed in the cap 26.

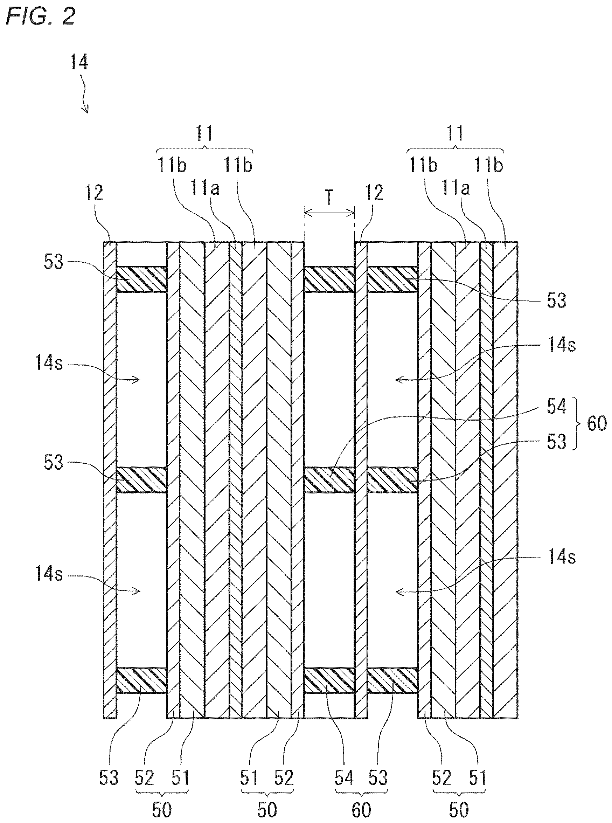

FIG. 2 is a cross-sectional view schematically showing a portion of the lithium secondary battery shown in FIG. 1. FIG. 2 is an enlarged view of a portion of a vertical cross section of the electrode group 14 including the winding axis of the electrode group 14. FIG. 2 includes a portion near the positive electrode surrounded by region II in FIG. 1 and a portion near the negative electrode surrounded by region III in FIG. 1.

The electrode group 14 includes a positive electrode 11, a negative electrode 12, a separator 50, and a spacer 60. The positive electrode 11, the negative electrode 12, and the separator 50 all have an elongated shape (a strip shape). The positive electrode 11, the negative electrode 12, and the separator 50 are spirally wound, with the separator 50 interposed between the positive electrode 11 and the negative electrode 12, and the electrode group 14 that includes a plurality of turns is thereby formed.

The positive electrode 11 includes a positive electrode current collector 11a and positive electrode material mixture layers 11b respectively formed on both sides of the positive electrode current collector 11a. The positive electrode current collector 11a is electrically connected to the cap 26, which functions as a positive electrode terminal, via a positive electrode lead 19.

In FIG. 2, as the negative electrode 12, a negative electrode (negative electrode current collector) without deposition of a lithium metal is shown. The negative electrode 12 is electrically connected to the case main body 15, which functions as a negative electrode terminal, via a negative electrode lead 20.

In this example, the separator 50 includes a porous sheet 51 and a composite material layer 52. The composite material layer 52 is formed on one of two main surfaces of the porous sheet 51 that is on the negative electrode 12 side. The spacer 60 is formed on the composite material layer 52 of the separator 50, and is in contact with the negative electrode 12. Due to the spacer 60, a space 14s is formed between the positive electrode 11 and the negative electrode 12 (between the negative electrode 12 and the separator 50). Because the space 14s is present, the change in the volume of the electrode group 14 caused by deposition of the lithium metal is reduced during charging, and thus the cycle characteristics are improved.

The separator 50 includes a plurality of first linear portions 53 and a plurality of second linear portions 54. The plurality of first linear portions 53 and the plurality of second linear portions 54 face each other with the negative electrode 12 interposed therebetween. Although not clearly seen from FIG. 2, when the plurality of first linear portions 53 and the plurality of second linear portions 54 are viewed in an overlapping manner, each of the plurality of first linear portions 53 crosses the plurality of second linear portions 54 at a plurality of points. The cross section shown in FIG. 2 shows crossing positions therebetween. In FIG. 2, the first linear portions 53 and the second linear portions have the same width and the same thickness T.

In FIG. 2, the plurality of first linear portions 53 are formed to have a straight linear shape (line segment shape) that extends along a first direction, and the plurality of second linear portions 54 are formed to have a straight linear shape (line segment shape) that extends along a second direction that is exactly opposite to the first direction when the plurality of first linear portions 53 and the plurality of second linear portions 54 are viewed in an overlapping manner. The plurality of first linear portions 53 and the plurality of second linear portions 54 are arranged in stripes that are parallel to each other in a periodic pattern.

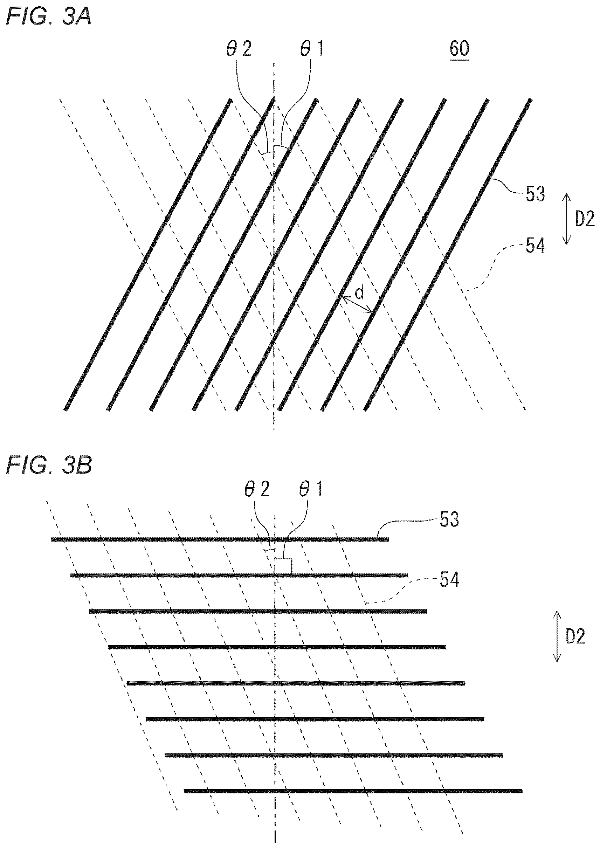

FIG. 3A is a plan view of a plurality of first linear portions 53 and a plurality of second linear portions 54 that constitute a spacer 60 included in the lithium secondary battery shown in FIG. 1 as viewed in an overlapping manner (or in other words, as viewed in a normal direction of a separator).

In FIG. 3A, the plurality of first linear portions 53 are arranged in stripes that are parallel to each other in a periodic pattern. The plurality of second linear portions 54 (indicated by broken lines in FIG. 3A, and the same applies to the diagrams below) are also arranged in stripes that are parallel to each other in a periodic pattern. When the plurality of first linear portions 53 and the plurality of second linear portions 54 are viewed in an overlapping manner, a smaller angle (angle θ1) formed by the first direction and a short-side direction D2 of the separator is equal to a smaller angle (angle θ2) formed by the second direction and the short-side direction of the separator, and an angle formed by the first direction and the second direction is equal to a sum (θ1 + θ2) of the angle θ1 and the angle θ2.

A lattice pattern is formed by the plurality of first linear portions 53 and the plurality of second linear portions 54, with a unit cell area S being equal to d²/sin2θ because the interval d1 between the first linear portions is equal to the interval d2 = d between the second linear portions.

FIG. 3B is a plan view of a plurality of first linear portions and a plurality of second linear portions that constitute another spacer as viewed in an overlapping manner. In FIG. 3B, the smaller angle (angle θ1) formed by the first direction and the short-side direction of the separator is 90°. The smaller angle (angle θ2) formed by the second direction and the short-side direction of the separator is an acute angle less than 90°.

One of the angles θ1 and θ2 may be 0°, and the other one of the angles θ1 and θ2 may be an angle (including 90°) other than 0°. The plurality of first linear portions 53 and the plurality of second linear portions 54 are provided uniformly between the separator 50 and the electrode.

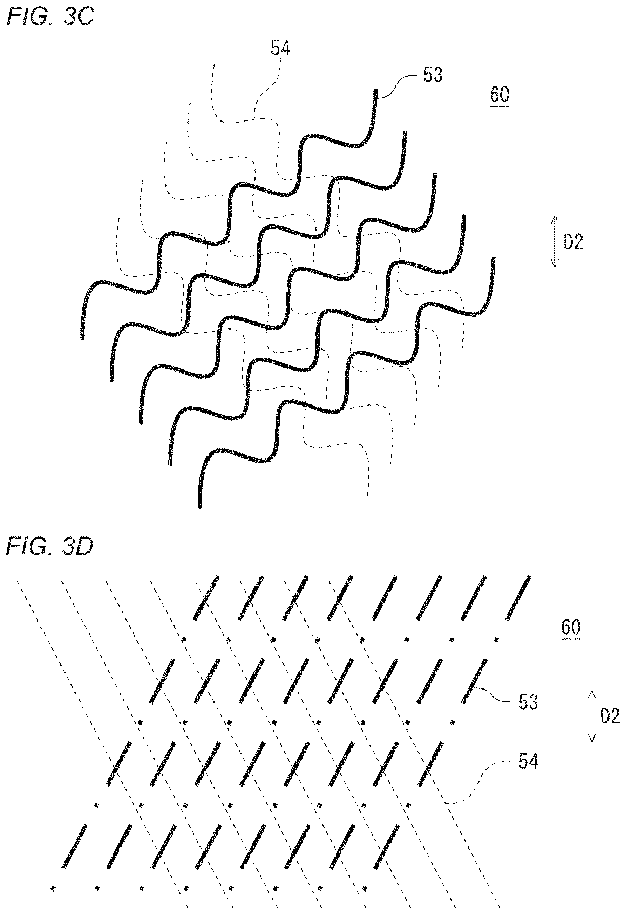

FIG. 3C is a plan view of a plurality of first linear portions 53 and a plurality of second linear portions 54 that constitute a still another spacer as viewed in an overlapping manner. In FIG. 3C, the plurality of first linear portions 53 are formed to have a corrugated shape that extends along a first direction, and the plurality of second linear portions 54 are formed to have a corrugated shape that extends along a second direction that is different from the first direction. The plurality of first linear portions 53 and the plurality of second linear portions 54 are arranged in rows that are parallel to each other and formed along a plurality of independent corrugated lines that do not cross each other, and have a periodic pattern. Accordingly, the plurality of first linear portions 53 and the plurality of second linear portions 54 are provided uniformly between the separator 50 and the electrode.

FIG. 3D is a plan view of a plurality of first linear portions and a plurality of second linear portions that constitute a still another spacer as viewed in an overlapping manner. In FIG. 3D, the plurality of first linear portions 53 are formed intermittently in the first direction. The plurality of second linear portions 54 may also be formed intermittently in the second direction. This structure improves the flowability or the diffusibility of the nonaqueous electrolyte when the nonaqueous electrolyte is a liquid nonaqueous electrolyte.

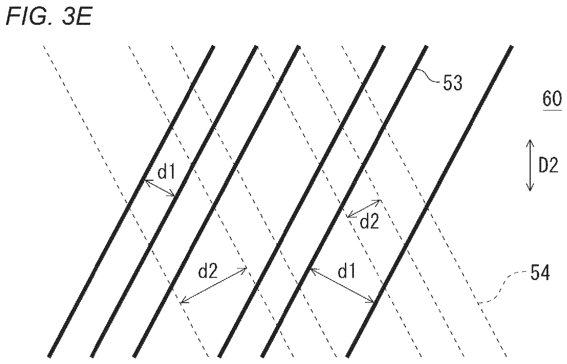

FIG. 3E is a plan view of a plurality of first linear portions and a plurality of second linear portions that constitute a still another spacer as viewed in an overlapping manner. In FIG. 3E, the interval d1 between the first linear portion 53 and the interval d2 between the second linear portions 54 are non-uniform rather than uniform. Due to the nature of the production process, there may be a case where it is not possible to provide the spacer in a uniform pattern. Even in this case, as long as the intervals d1 and d2 are generally uniform as in the example shown in the diagram, there is no problem in particular.

In the embodiment given above, an example was described in which the lithium secondary battery is a cylindrical lithium secondary battery that includes a spirally wound-type electrode group. However, the lithium secondary battery of the present embodiment is not limited to the configuration described in Embodiment 1, and is also applicable to any other configuration. The shape of the lithium secondary battery can be selected according to the application of the lithium secondary battery as appropriate from among various types of shapes including a cylindrical shape, a prismatic shape, a flat shape, and the like. The type of the electrode group is not particularly limited, either, and the electrode group may be a stacked-type electrode group.

### (Additional Statement)

The following techniques are disclosed based on the forgoing description.

### (Technique 1)

A lithium secondary battery including:
a positive electrode;
a negative electrode;
a separator;
a spacer; and
a nonaqueous electrolyte,
wherein the separator is provided between the positive electrode and the negative electrode,
the spacer is provided between the separator and at least one of the positive electrode and the negative electrode,
in the negative electrode, a lithium metal deposits during charging and the lithium metal dissolves into the nonaqueous electrolyte during discharging,
the spacer includes a plurality of first linear portions and a plurality of second linear portions,
the plurality of first linear portions and the plurality of second linear portions face each other with the positive electrode or the negative electrode interposed therebetween, and
when the plurality of first linear portions and the plurality of second linear portions are viewed in an overlapping manner, each of the plurality of first linear portions crosses at least a portion of the plurality of second linear portions at a plurality of points.

### (Technique 2)

The lithium secondary battery in accordance with technique 1,
wherein when the plurality of first linear portions and the plurality of second linear portions are viewed in an overlapping manner,
the plurality of first linear portions are formed to have a straight linear shape that extends along a first direction, and
the plurality of second linear portions are formed to have a straight linear shape that extends along a second direction that is different from the first direction.

### (Technique 3)

The lithium secondary battery in accordance with technique 1,
wherein when the plurality of first linear portions and the plurality of second linear portions are viewed in an overlapping manner,
the plurality of first linear portions are formed to have a corrugated shape that extends along a first direction, and
the plurality of second linear portions are formed to have a corrugated shape that extends along a second direction that is different from the first direction.

### (Technique 4)

The lithium secondary battery in accordance with technique 1,
wherein when the plurality of first linear portions and the plurality of second linear portions are viewed in an overlapping manner,
either one of the plurality of first linear portions and the plurality of second linear portions are formed to have a straight linear shape that extends along a first direction, and
the other one of the plurality of first linear portions and the plurality of second linear portions are formed to have a corrugated shape that extends along a second direction that is different from the first direction.

### (Technique 5)

The lithium secondary battery in accordance with any one of techniques 1 to 4,
wherein at least a portion of the plurality of first linear portions are formed intermittently in the first direction.

### (Technique 6)

The lithium secondary battery in accordance with any one of techniques 1 to 5,
wherein at least a portion of the plurality of second linear portions are formed intermittently in the second direction.

### (Technique 7)

The lithium secondary battery in accordance with any one of techniques 1 to 6,
wherein a smaller angle θ1 formed by the first direction and a short-side direction of the separator is 0° or more and 90° or less.

### (Technique 8)

The lithium secondary battery in accordance with any one of techniques 1 to 7,
wherein a smaller angle θ2 formed by the second direction and a short-side direction of the separator is 0° or more and 90° or less.

### (Technique 9)

The lithium secondary battery in accordance with any one of techniques 1 to 8,
wherein when the plurality of first linear portions and the plurality of second linear portions are viewed in an overlapping manner,
a lattice pattern is formed by the plurality of first linear portions and the plurality of second linear portions.

### (Technique 10)

The lithium secondary battery in accordance with technique 9,
wherein an area surrounded by inner frame sides of a unit cell that constitutes the lattice pattern is 0.2 mm² or more and 200 mm² or less.

### (Technique 11)

The lithium secondary battery in accordance with any one of techniques 1 to 10,
wherein when the plurality of first linear portions and the plurality of second linear portions are viewed in an overlapping manner,
the plurality of first linear portions and the plurality of second linear portions are line-symmetric relative to a short-side direction of the separator.

### (Technique 12)

The lithium secondary battery in accordance with any one of techniques 1 to 11,
wherein the plurality of first linear portions and the plurality of second linear portions are formed on a surface of the separator.

### (Technique 13)

The lithium secondary battery in accordance with any one of techniques 1 to 12,
wherein the plurality of first linear portions and the plurality of second linear portions each have an average thickness of 20 µm or more.

### (Technique 14)

The lithium secondary battery in accordance with any one of techniques 1 to 13,
wherein the plurality of first linear portions and the plurality of second linear portions each have an average width of 50 µm or more and 1000 µm or less.

### (Technique 15)

The lithium secondary battery in accordance with any one of techniques 1 to 14,
wherein the positive electrode and the negative electrode are spirally wound with the separator and the spacer interposed therebetween to form an electrode group.

### [Examples]

Hereinafter, the lithium secondary battery according to the present disclosure will be further specifically described based on examples and comparative examples. However, the present disclosure is not limited to the examples given below.

### <<Examples 1 to 9>>

### (1) Production of Positive Electrode

A positive electrode material mixture slurry was prepared by mixing a layered rock salt-type lithium-containing transition metal oxide (NCA as a positive electrode active material) containing Li, Ni, Co, and Al (with the molar ratio of Li relative to the total amount of Ni, Co, and Al being set to 1.0) with acetylene black (AB as a conductive material) and polyvinylidene fluoride (PVdF as a binder) at a mass ratio of NCA:AB:PVdF = 95:2.5:2.5, further adding an appropriate amount of N-methyl-2-pyrrolidone(NMP) thereto, and stirring the mixture. The obtained positive electrode material mixture slurry was applied to both sides of a strip-shaped Al foil (as a positive electrode current collector) and dried, and the positive electrode material mixture coating films were rolled using a roller. Lastly, the obtained stack of the positive electrode current collector and the positive electrode material mixture was cut into a predetermined electrode size. In this way, a positive electrode including positive electrode material mixture layers respectively provided on both sides of the positive electrode current collector was obtained.

### (2) Production of Negative Electrode

A strip-shaped electrolytic copper foil (with a thickness of 15 µm) was prepared as a negative electrode current collector.

### (3) Separator

A 20 µm-thick polyethylene microporous thin film was prepared as a separator.

### (4) Formation of Spacer on Main Surface of Separator

A spacer material dispersion liquid was prepared by mixing 60 parts by volume of insulating particles (with a median size of 3 µm and a volume resistivity of 10¹⁴Ω·cm), 39 parts by volume of alkyd resin as a binder resin, 1 part by volume of CMC (sodium salt), and water as a dispersion medium.

Next, the spacer material dispersion liquid was discharged in a predetermined pattern onto one side of each of a pair of the microporous thin films using a dispenser, and the coating films were vacuum dried to form first linear portions and second linear portions arranged in a pattern shown in Table 1. The first linear portions and the second linear portions were formed to have the same average thickness of 40 µm.

In Table 1, "Average width" indicates the average width of the first linear portions and the second linear portions, and the first linear portions and the second linear portions were formed to have the same average width. "Interval" indicates the interval d (= d1 = d2) between the plurality of first (second) linear portions. "Angle θ" indicates the angle θ (= θ1 = θ2) formed by the short-side direction of the separator and the first (second) linear portions. The angle θ1 and the angle θ2 are angles in opposite directions, and the angle formed by the first linear portions and the second linear portions is (θ1 + θ2). "Area S" indicates the unit cell area (S). "Coverage ratio" indicates the proportion of the area of a region A relative to the total area of the region A and a region B on each surface of the separator, where the region A is a region that faces the spacer, and the region B is a region that does not face the spacer.

### (5) Preparation of Nonaqueous Electrolyte

A liquid nonaqueous electrolyte was prepared by mixing ethylene carbonate (EC) and dimethyl carbonate (DMC) at a volume ratio of EC:DMC = 30:70, and dissolving, in the obtained mixed solvent, LiPF₆ at a concentration of 1 mol/L and LiBF₂ (C₂O₄) at a concentration of 0.1 mol/L.

### (6) Assembly of Battery

In an inert gas atmosphere, the positive electrode and the negative electrode current collector were spirally wound with the separator interposed therebetween to produce an electrode group. At this time, the separator was placed such that the spacers formed on one side of each of the pair of separators faced the negative electrode. The electrode group was housed in a bag-like outer casing made of an Al layer-attached laminate sheet. After the nonaqueous electrolyte was injected, the outer casing was sealed. In this way, batteries A1 to A9 of Examples 1 to 9 were obtained.

### <<Comparative Examples 1 to 3>>

Batteries B1 to B3 of Comparative Examples 1 to 3 were obtained in the same manner as the batteries of Examples, except that the first linear portions and the second linear portions were formed with the angle being set to θ1 = θ2 = 90°.

### [Evaluation]

### (Capacity Retention Rate)

Each battery was subjected to a charging/discharging test in a thermostatic chamber set at 25°C under the following conditions. The rest time between charging and discharging was set to 20 minutes.

### (Charging)

Each battery was subjected to constant current charging at a current value of 2.15 mA per electrode unit area (in square centimeter) to a battery voltage of 4.1 V, and then subjected to constant voltage charging at a voltage of 4.1 V to a current value per electrode unit area of 0.54 mA.

### (Discharging)

Each battery was subjected to constant current discharging at a current value per electrode unit area of 2.15 mA to a battery voltage of 3.75 V.

The charging and the discharging described above were defined as one cycle, and the battery was charged and discharged for 200 cycles. The proportion (%) of discharge capacity at the 200th cycle relative to discharge capacity at the first cycle was determined as capacity retention rate.

### (Initial Rate Characteristics)

Each battery in an initial state was charged under the same conditions as described above in a thermostatic chamber set at 25°C. Then, after a rest time of 20 minutes, the battery was subjected to 0.5C discharging described below. Also, each battery was charged under the same condition as described above in a thermostatic chamber set at 25°C. Then, after a rest time of 20 minutes, the battery was subjected to 0.1C discharging described below. The proportion (%) of discharge capacity at 0.5C discharging relative to discharge capacity at 0.1C discharging was determined as initial rate characteristics.

### (0.5C Discharging)

The battery was subjected to constant current discharging at a current value per electrode unit area of 2.15 mA to a battery voltage of 3.75 V.

### (0.1C Discharging)

The battery was subjected to constant current discharging at a current value per electrode unit area of 0.43 mA to a battery voltage of 3.75 V.

Evaluation results are shown in Table 1 together with the spacer configuration.

**[Table 1]**

| | Average width (mm) | Interval (mm) | Angle θ (°) | Area S (mm²) | Coverage ratio (%) | Capacity retention rate (%) | Rate characteristics (%) |
|---|---|---|---|---|---|---|---|
| B1 | 1 | 3.5 | 90 | - | 22 | 89 | 92.5 |
| B2 | 0.5 | 3.5 | 90 | - | 13 | 82 | 93.2 |
| B3 | 0.25 | 3.5 | 90 | - | 7 | 80 | 93.3 |
| A1 | 0.25 | 1 | 15 | 2 | 20 | 92 | 92.4 |
| A2 | 0.25 | 5 | 15 | 50 | 5 | 90 | 93.5 |
| A3 | 0.25 | 12 | 15 | 288 | 2 | 82 | 93.5 |
| A4 | 0.25 | 1 | 45 | 1 | 20 | 92 | 92.3 |
| A5 | 0.25 | 5 | 45 | 25 | 5 | 91 | 93.4 |
| A6 | 0.25 | 12 | 45 | 144 | 2 | 89 | 93.5 |
| A7 | 0.25 | 1 | 60 | 1.2 | 20 | 93 | 92.3 |
| A8 | 0.25 | 5 | 60 | 29 | 5 | 92 | 93.4 |
| A9 | 0.25 | 12 | 60 | 166 | 2 | 89 | 93.3 |

It can be seen that, in the batteries B1 to B3, a sufficient capacity retention rate cannot be achieved unless the average width of the linear portions is large. When the average width is 1 mm, the capacity retention rate is equal to that of the batteries A6 and A9, and thus it can be said that the capacity retention rate is favorable. However, the initial rate characteristics are lower than those of the batteries A6 and A9. These results show that if the plurality of first linear portions and the plurality of second linear portions do not cross when the plurality of first linear portions and the plurality of second linear portions are viewed in an overlapping manner, the capacity retention rate cannot be increased unless the coverage ratio is increased, and also show that when the coverage ratio is increased, it is difficult to sufficiently increase the rate characteristics.

On the other hand, in the batteries A1 to A9, even when the coverage ratio is reduced to a very small value by setting the average width of the linear portions to be small, a high capacity retention rate is achieved. This tendency is remarkable particularly when the unit cell area (S) is 200 mm² or less. By reducing the coverage ratio, the initial rate characteristics are improved. It is considered that these results show that a sufficient space for the lithium metal to deposit is securely formed.

### [Industrial Applicability]

The lithium secondary battery according to the present disclosure can be used in electronic devices such as a mobile phone, a smart phone, and a tablet terminal, electric vehicles including a hybrid vehicle, a plug-in hybrid vehicle, and the like, household storage batteries combined with solar cells, and the like.

The present invention has been described in terms of the presently preferred embodiments, but the disclosure should not be interpreted as limiting. Various alterations and modifications will no doubt become apparent to those skilled in the art to which the present invention pertains, after having read the disclosure. Accordingly, it is to be understood that the appended claims be interpreted as covering all alterations and modifications which fall within the true spirit and scope of the present invention.

### [Reference Signs List]

10: lithium secondary battery
11: positive electrode
12: negative electrode
14: electrode group
14s: space
15: case main body
16: sealing member
17, 18: insulating plate
21: narrow portion
22: filter
23: lower valve
24: insulating member
25: upper valve
26: cap
27: gasket
50: separator
51: porous sheet
52: composite material layer
53: first linear portion
54: second linear portion

## Claims

1. A lithium secondary battery comprising:
a positive electrode;
a negative electrode;
a separator;
a spacer; and
a nonaqueous electrolyte,
wherein the separator is provided between the positive electrode and the negative electrode,
the spacer is provided between the separator and at least one of the positive electrode and the negative electrode,
in the negative electrode, a lithium metal deposits during charging and the lithium metal dissolves into the nonaqueous electrolyte during discharging,
the spacer includes a plurality of first linear portions and a plurality of second linear portions,
the plurality of first linear portions and the plurality of second linear portions face each other with the positive electrode or the negative electrode interposed therebetween, and
when the plurality of first linear portions and the plurality of second linear portions are viewed in an overlapping manner, each of the plurality of first linear portions crosses at least a portion of the plurality of second linear portions at a plurality of points.

2. The lithium secondary battery in accordance with claim 1,
wherein when the plurality of first linear portions and the plurality of second linear portions are viewed in an overlapping manner,
the plurality of first linear portions are formed to have a straight linear shape that extends along a first direction, and
the plurality of second linear portions are formed to have a straight linear shape that extends along a second direction that is different from the first direction.

3. The lithium secondary battery in accordance with claim 1,
wherein when the plurality of first linear portions and the plurality of second linear portions are viewed in an overlapping manner,
the plurality of first linear portions are formed to have a corrugated shape that extends along a first direction, and
the plurality of second linear portions are formed to have a corrugated shape that extends along a second direction that is different from the first direction.

4. The lithium secondary battery in accordance with claim 1,
wherein when the plurality of first linear portions and the plurality of second linear portions are viewed in an overlapping manner,
either one of the plurality of first linear portions and the plurality of second linear portions are formed to have a straight linear shape that extends along a first direction, and
the other one of the plurality of first linear portions and the plurality of second linear portions are formed to have a corrugated shape that extends along a second direction that is different from the first direction.

5. The lithium secondary battery in accordance with any one of claims 2 to 4,
wherein at least a portion of the plurality of first linear portions are formed intermittently in the first direction.

6. The lithium secondary battery in accordance with any one of claims 2 to 4,
wherein at least a portion of the plurality of second linear portions are formed intermittently in the second direction.

7. The lithium secondary battery in accordance with any one of claims 2 to 4,
wherein a smaller angle θ1 formed by the first direction and a short-side direction of the separator is 0° or more and 90° or less.

8. The lithium secondary battery in accordance with any one of claims 2 to 4,
wherein a smaller angle θ2 formed by the second direction and a short-side direction of the separator is 0° or more and 90° or less.

9. The lithium secondary battery in accordance with claim 2,
wherein when the plurality of first linear portions and the plurality of second linear portions are viewed in an overlapping manner,
a lattice pattern is formed by the plurality of first linear portions and the plurality of second linear portions.

10. The lithium secondary battery in accordance with claim 9,
wherein an area surrounded by inner frame sides of a unit cell that constitutes the lattice pattern is 0.2 mm² or more and 200 mm² or less.

11. The lithium secondary battery in accordance with claim 1,
wherein when the plurality of first linear portions and the plurality of second linear portions are viewed in an overlapping manner,
the plurality of first linear portions and the plurality of second linear portions are line-symmetric relative to a short-side direction of the separator.

12. The lithium secondary battery in accordance with claim 1,
wherein the plurality of first linear portions and the plurality of second linear portions are formed on a surface of the separator.

13. The lithium secondary battery in accordance with claim 1,
wherein the plurality of first linear portions and the plurality of second linear portions each have an average thickness of 20 µm or more.

14. The lithium secondary battery in accordance with claim 1,
wherein the plurality of first linear portions and the plurality of second linear portions each have an average width of 50 µm or more and 1000 µm or less.

15. The lithium secondary battery in accordance with claim 1,
wherein the positive electrode and the negative electrode are spirally wound with the separator and the spacer interposed therebetween to form an electrode group.
